# EUROPÄISCHE PATENTSCHRIFT

(11) **EP 2 434 601 B1**
(45) Veröffentlichungstag und Bekanntmachung des Hinweises auf die Patenterteilung: **19.07.2017**
(21) Anmeldenummer: 10306027.3
(22) Anmeldetag: 24.09.2010
(51) Int. Cl.: H02G 3/22, B60R 16/02

(54) **ANORDNUNG ZUM VERBINDEN EINES ELEKTRISCHEN BAUTEILS MIT EINER ELEKTRISCHEN EINHEIT**
ASSEMBLY FOR CONNECTING AN ELECTRICAL COMPONENT WITH AN ELECTRICAL UNIT
DISPOSITIF DE LIAISON D'UN COMPOSANT ÉLECTRIQUE ET D'UNE UNITÉ ÉLECTRIQUE

(43) Veröffentlichungstag der Anmeldung: 28.03.2012
(73) Patentinhaber: Nexans, 75008 Paris (FR)
(72) Erfinder: Nachbauer, Otto, 92695 Floß (DE); Völkl, Dietmar, 95703 Plößberg (DE)
(74) Vertreter: Döring, Roger

(56) Entgegenhaltungen:
- EP-A1- 0 278 544
- EP-A2- 0 499 533
- DE-A1- 3 345 770
- DE-A1-102008 044 034
- DE-U1- 20 009 530
- US-A1- 2007 210 486

## Beschreibung

Die Erfindung bezieht sich auf eine Anordnung zum elektrisch leitenden Verbinden eines elektrischen Bauteils mit einer elektrischen Einheit gemäß dem Oberbegriff des Patentanspruchs 1.

Eine derartige Anordnung geht beispielsweise aus der DE 10 2008 044 034 A1 hervor.

Eine solche Anordnung wird beispielsweise in Getrieben von Kraftfahrzeugen verwendet, die in Öl enthaltenden Gehäusen untergebracht sind. "Elektrisches Bauteil" im Sinne der Erfindung können beispielsweise Sensoren, welche die Drehzahl der einzelnen Räder des Getriebes überwachen, oder Ventile bzw. Aktoren sein, durch welche die Positionen der Räder verändert werden kann. Stellvertretend für alle möglichen, in dem Gehäuse anzuordnenden Bauteile werden im folgenden die Sensoren berücksichtigt.

Mittels der Sensoren kann in bekannter Technik - wie bereits erwähnt - die Drehzahl der einzelnen Räder eines Getriebes überwacht werden. Die Sensoren sind über elektrische Adern mit einer elektrischen bzw. elektronischen Einheit verbunden. Derartige Sensoren sind bekannt und auf dem Markt erhältlich. Sie arbeiten beispielsweise induktiv oder nutzen den Halleffekt aus. In einem Getriebe auftretende Fehler werden im jeweiligen Kraftfahrzeug beispielsweise in einem Sichtfeld angezeigt, so daß sie behoben werden können. Die Sensoren werden in dem Gehäuse ständig von Öl umspült bzw. durch Öl benetzt. Das gilt auch für den Bereich der Adern, der an die Sensoren angeschlossen ist. Um zu verhindern, daß das Öl entlang der Adern wandert und bis zur elektrischen Einheit vordringt, sind die Adern außerhalb des Gehäuses beispielsweise durch Steckverbinder oder andere "Ölstopper" unterbrochen. Die Montage der Sensoren mit angeschlossenen Adern ist entsprechend aufwendig.

Aus der EP 0 499 533 A2 geht ein Verbinder mit einer Durchführung hervor, der in einem Benzintank für Kraftfahrzeuge eingesetzt werden soll. Der Verbinder wird in eine Platte mit einer Öffnung eingebaut, in welche ein O-Ring als Dichtelement eingesetzt wird. Auf den O-Ring wird eine als Durchführung für elektrische Adern dienende Platte aufgesetzt. Die Adern sind durch Zugentlastungen in der Platte festgelegt. Sie können in abisolierten Bereichen so abgedichtet werden, daß keine Feuchtigkeit bzw. kein Gas hindurchtreten kann. Diese Bereiche liegen in Montageposition jeweils innerhalb einer Zugentlastung.

Die DE 200 09 530 U1 beschreibt eine Kabeldurchführung, die beispielsweise in der Wand eines Getriebegehäuses oder eines Motorgehäuses eingesetzt werden kann. Sie ist mit einem mit dem jeweiligen Gehäuse zu verbindenden Flansch angerüstet und hat mehrere Kabelkanäle zur Aufnahme je eines Kabels, das einen von einem Isoliermantel umgebenen, als Kupferlitze ausgeführten Leiter hat. Der Isoliermantel des Kabels ist auf einer gegenüber dem Kabelkanal kürzeren Länge entfernt. Dieser Bereich des Kabels liegt in Montageposition innerhalb des Kabelkanals und ist von einer Vergußmasse umgeben, die auch den Kabelkanal abdichtet.

Aus der US 2007/0210486 A1 geht eine Durchführung für elektrische Adern durch die Wandung eines Benzintanks hervor. Sie besteht aus einem Kunststoffkörper, der in einem Spritzgießwerkzeug um die Adern herumgespritzt ist, welche in den vom Kunststoffkörper umschlossenen Bereichen abisoliert sind. Der Kunststoffkörper ist in Montageposition unter Zwischenschaltung eines O-Rings in die Wandung des Benzintanks eingebaut.

Die DE 33 45 770 A1 beschreibt eine öldichte elektrische Durchführung für einen hydraulischen Stellmotor. Zu einem in einem ölgefüllten Arbeitsraum desselben angeordneten Elektromotor führende elektrische Leitungen sind in einer Metallhülse durch eine Abdeckplatte hindurchgeführt. In der Metallhülse sind parallel zueinander verlaufende Einzeldrähte angebracht, die in einen den gesamten Querschnitt der Metallhülse ausfüllenden Dichtkörper aus Kunststoff eingebettet sind. Die Leiter der vom Elektromotor kommenden Leitungen sind auf der einen Seite an die Einzeldrähte angeschlossen und die weiterführenden Leiter einer Anschlußleitung auf deren anderer Seite.

Aus der EP 0 278 544 A1 geht eine Scheibe zum Abdichten einer in einer Wandung angebrachten Öffnung hervor. Die Scheibe hat Durchgangslöcher, durch welche elektrische Leiter hindurchgeführt werden können. Die Leiter sind in Montageposition von einem aus Segmenten bestehenden Dichtkörper umgeben, der in eines der Durchgangslöcher paßt und dasselbe in Montageposition abdichtet.

Die eingangs erwähnte DE 10 2008 044 054 A1 beschreibt eine Anordnung mit einer Kabeldurchführung für ein Öl enthaltendes Aggregat. Das Aggregat hat eine Öffnung, die unter Zwischenschaltung einer Dichtung durch ein als Durchführung dienendes Bauteil verschlossen ist. Das Bauteil hat eine zentrale Öffnung, in welcher ein als Vorumspritzung bezeichneter Halter eingesetzt ist, der um einen Kabelbaum herumgespritzt ist. Der Kabelbaum enthält Leitungen bzw. Adern, die mit elektrischen und elektronischen Komponenten verbunden sind, welche im Aggregat angeordnet sind. Zur Abdichtung des Durchführungsbereichs ist eine Vergußmasse eingesetzt, die den Halter im Bauteil festlegt und alle zwischen den beiden Elementen vorhandenen Spalte abdichtet.

Der Erfindung liegt die Aufgabe zugrunde, die eingangs geschilderte Anordnung einfacher zu gestalten.

Diese Aufgabe wird entsprechend den kennzeichnenden Merkmalen des Patentanspruchs 1 gelöst.

Bei dieser Anordnung können alle eingesetzten Adern zwischen den Sensoren und der elektrischen Einheit ohne Unterbrechung und ohne den Einsatz von irgendwelchen Ölstopp-Elementen installiert werden, so daß sich eine kompakte, einfach zu montierende Anordnung ergibt. Der von der Isolierung der Adern umschlossene Raum ist für das Öl durch das zusätzliche Material undurchlässig und die Dichtstopfen verhindern, daß Öl außen an den Adern entlang durch die Durchführung hindurchtreten kann. Das das Öl stoppende Material kann bei einem massiven Leiter eine um denselben herum angebrachte Zwischenschicht sein. Es füllt andererseits bei einem Litzenleiter auch dessen innere Hohlräume aus. Die Dichtstopfen umschließen einerseits die Adern fest und dicht und sie liegen andererseits innerhalb des jeweiligen Durchgangslochs fest und dicht an der Durchführung an.

Ein Ausführungsbeispiel des Erfindungsgegenstandes ist in den Zeichnungen dargestellt.

Es zeigen:
- Fig. 1: in schematischer Darstellung eine Anordnung nach der Erfindung.
- Fig. 2: eine Einzelheit aus Fig. 1 in vergrößerter Darstellung.
- Fig. 3: eine Draufsicht auf eine in der Anordnung einsetzbare Durchführung.
- Fig. 4: einen Dichtstopfen der Anordnung in weiter vergrößerter Darstellung.

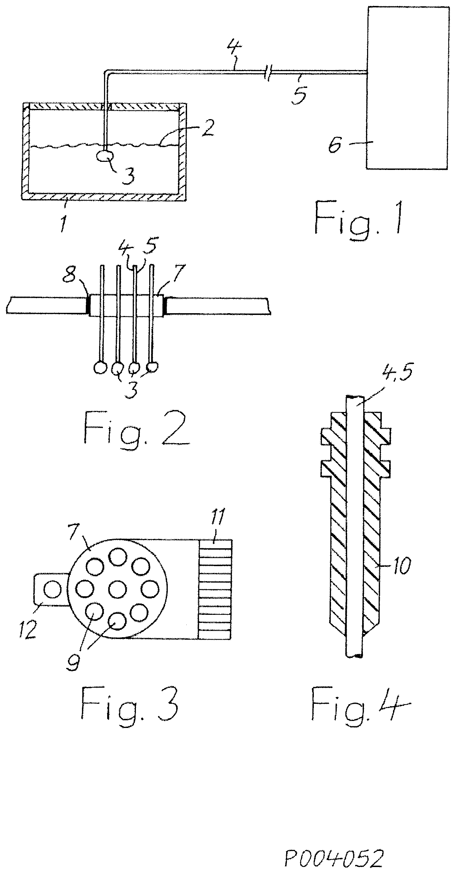

In Fig. 1 ist schematisch ein Gehäuse 1 dargestellt, bei dem es sich beispielsweise um eine sogenannte Ölwanne handelt, in welcher ein Getriebe eines Kraftfahrzeugs gelagert ist. Das nicht mit dargestellte Getriebe hat mehrere Zahnräder, die je nach Geschwindigkeit bzw. eingestellter Schaltung des Kraftfahrzeugs im Einsatz sind, d.h. mit einer vorgegebenen Drehzahl um ihre Achse gedreht werden. Das Gehäuse 1 enthält Öl. Das ist durch die wellige Linie 2 in Fig. 1 angedeutet. Die Zahnräder des Getriebes werden während des Betriebes des zugehörigen Kraftfahrzeugs also mit Öl beaufschlagt.

Ebenfalls im Gehäuse 1 angeordnet ist gemäß Fig. 1 ein Sensor 3, der über zwei elektrische Adern 4 und 5 mit einer elektrischen bzw. elektronischen Einheit 6 verbunden ist. Die Adern 4 und 5, welche jeweils aus einem elektrischen Leiter und einer denselben umgebenden Isolierung bestehen, sind zwischen dem Sensor 3 und der Einheit 6 ohne Unterbrechung geführt. Sie haben in dem von der Isolierung umschlossenen Raum zusätzliches Material, das für Öl undurchlässig ist und somit diesen Raum gegen das Vordringen von Öl abdichtet. Das zusätzliche Material kann einen massiven Leiter als denselben umgebende Zwischenschicht aufgebracht sein. Bei einem Litzenleiter füllt es auch dessen innere Hohlräume aus.

In der Regel sind in dem Gehäuse 1 mehrere Sensoren 3 angebracht, und zwar mit Vorteil für jede Getriebestufe ein Sensor. In Fig. 2 sind vier Sensoren 3 eingezeichnet, die jeder an zwei Adern 4 und 5 angeschlossen sind. Das Gehäuse 1 hat eine Öffnung, durch welche die Adern hindurchtreten können. Die Öffnung des Gehäuses 1 ist in Gebrauchslage durch eine Durchführung 7 öldicht und feuchtigkeitsdicht verschlossen. Sie weist dazu eine umlaufende Dichtung 8 auf, beispielsweise einen O-Ring, die fest an der Wandung des Gehäuses 1 anliegt. Die Durchführung 7 besteht aus Kunststoff, beispielsweise aus Polyamid oder Polybutylenterephthalat.

Die Durchführung 7 hat gemäß Fig. 3 mehrere Durchgangslöcher 9, deren Anzahl mit Vorteil der maximalen Anzahl von Adern entspricht, die einerseits mit je einem Sensor 3 und andererseits mit der Einheit 6 verbunden werden sollen. Es soll mindestens ein Durchgangsloch vorhanden sein. Bei mehr als einem Durchgangsloch können Durchgangslöcher, die nicht für die Durchführung von Adern benötigt werden, verschlossen werden oder bleiben. In jedem Durchgangsloch 9, durch das mindestens eine Ader hindurchgeführt ist, ist in Gebrauchslage ein Dichtstopfen 10 angebracht, der öl- und feuchtigkeitsdicht in dasselbe eingesetzt ist. Jeder Dichtstopfen 9 hat mindestens eine Bohrung, deren lichte Weite dem Außendurchmesser einer Ader 4 bzw. 5 so angepaßt ist, daß dieselbe öl- und feuchtigkeitsdicht umschlossen ist. Es ist jedoch auch möglich, zwei oder mehr Bohrungen zum Durchführen von zwei oder mehr Adern durch nur einen Dichtstopfen in demselben anzubringen. Die Dichtstopfen 10 bestehen beispielsweise aus einem Elastomer, wie beispielsweise Silikon. Im folgenden werden Dichtstopfen 10 beschrieben, durch welche nur eine Ader 4 bzw. 5 hindurchgeführt ist.

Vor dem Einsetzen der Durchführung 7 in die Öffnung des Gehäuses 1 wird beispielsweise in jedes Durchgangsloch 9, durch welches eine Ader 4 oder 5 hindurchgeführt werden soll, ein Dichtstopfen 10 eingesetzt. Die Adern 4 und 5 können danach durch die Dichtstopfen 10 hindurchgeschoben bzw. hindurchgezogen werden. Sie können aber auch vor dem Einsetzen der Dichtstopfen 10 in die Durchgangslöcher 9 durch dieselben hindurchgezogen und positionsgenau auf denselben angebracht werden. Durch das dann folgende Eindrücken der Dichtstopfen 10 in die Durchgangslöcher 9 wird ein zusätzlicher Druck in radialer Richtung auf die Adern 4 bzw. 5 ausgeübt, die dadurch im Sinne der Abdichtung gegen Öl noch fester umschlossen werden.

Die Durchführung 7 kann zusätzlich mit einer radial abstehenden Erweiterung 11 ausgerüstet sein, in bzw. auf welcher Klemmelemente zum zugentlasteten Festlegen der Adern 4 bzw. 5 angebracht sind. Auf der zu der Einheit 6 führenden Seite der Adern 4 und 5 an denselben angreifende Zugkräfte können sich dadurch nicht auf den Bereich der Dichtstopfen 10 auswirken.

An der Durchführung 7 kann auch eine Lasche 12 zu ihrer zusätzlichen mechanischen Befestigung am Gehäuse 1 angebracht sein, beispielsweise mittels einer Schraube.

## Patentansprüche

1. Anordnung zum elektrisch leitenden Verbinden eines elektrischen Bauteils, welches in einem Öl enthaltenden Gehäuse (1) angebracht ist, mit einer elektrischen Einheit (6), bei welcher zwischen dem Bauteil und der Einheit (6) mindestens zwei aus einem elektrischen Leiter und einer denselben umgebenden Isolierung bestehende Adern (4,5) angebracht sind, bei welcher eine Öffnung des Gehäuses (1) in Gebrauchslage durch eine aus Isoliermaterial bestehende Durchführung (7) öl- und feuchtigkeitsdicht verschlossen ist, die mindestens ein Durchgangsloch (9) zum Durchführen der Adern (4,5) hat, und bei welcher die Adern durch mindestens einen in dem Durchgangsloch (9) der Durchführung (7) vorhandenen Halter hindurchgeführt sind, **dadurch gekennzeichnet,**
- **dass** der Halter als die Adern (4,5) eng umschließender Dichtstopfen (10) ausgebildet ist, der in Gebrauchslage in dem Durchgangsloch (9) der Durchführung (7) öl- und feuchtigkeitsdicht angeordnet ist, und
- **dass** für die Adern (4, 5), welche zwischen dem elektrischen Bauteil und der elektrischen Einheit (6) ohne Unterbrechung und ohne den Einsatz von Ölstopp-Elementen installiert sind, jeweils eine Ader eingesetzt ist, bei der zwischen dem Leiter und seiner Isolierung zusätzliches, für Öl undurchlässiges Material angebracht ist, das alle innerhalb des von der Isolierung umschlossenen Raums vorhandenen Hohlräume ausfüllt, wobei das Material bei einer Ader mit einem massiven Leiter als eine denselben rundum umgebende Zwischenschicht ausgeführt ist und bei einer Ader mit einem Litzenleiter auch dessen innere Hohlräume ausfüllt.

2. Anordnung nach Anspruch 1, **dadurch gekennzeichnet, dass** jede Ader (4,5) durch einen separaten Dichtstopfen (10) hindurchgeführt ist.

3. Anordnung nach Anspruch 1, **dadurch gekennzeichnet, dass** zwei oder mehr Adern (4,5) durch einen gemeinsamen Dichtstopfen (10) hindurchgeführt sind.

4. Anordnung nach einem der Ansprüche 1 bis 3, **dadurch gekennzeichnet, dass** an der Durchführung (7) eine Erweiterung (10) mit Klemmelementen zum zugentlasteten Festlegen der Adern (4, 5) angebracht ist.

## Claims

1. Arrangement for electrically conductively connecting of an electrical component, which is arranged in a housing (1) containing oil, to an electrical unit (6),inwhichbetweenthe component and the unit(6)atleasttwo conductors (4,5) are mounted, which consist of an electrical core and an insulation surrounding the same, in which the ho using (1) has an opening which in the position of use is closed oil-tight and moisture-tight by a bushing (7), which has at least one through hole (9) for passing the conductors (4,5) there through, and in which the conductors are pissed through a holderwhich is provided in the through hole (9) of the bushing (7), **characterized in**
- **that** the holder is a sealing plug (10) which surrounds tightly the conductors (4,5) and which in the po sitio n of use is mo unte d oil-tight and moisture-tight in the through hole (9) of the bushing (7), and
- **that** for the conductors (4,5), which are installed between the electrical c o mp o ne nt a nd the electrical unit (6) without interruption and with out the use of oil-stopping elements, a conductorisused respectively, which is provided between the core and its insulation with additional material, which is impermeable to oil and fills all space within the gap which is surrounded by the insulation, wherein the additional material in case of a solid core of the conductor is an intermediate layer surrounding the core and in case of a stranded core of the conductoralso fills out the inner hollow spacesofthe same.

2. Arrangement according to claim 1, **characterized in that** each conductor (4,5) is passed through a separate sealing plug (10).

3. Arrangement according to claim 1, **characterized in that** two or more conductors (4,5) are passed through a common sealing plug (10).

4. Arrangement according to one of the claims 1 to 3, **characterized in that** the bushing (7) has an extension (10) with clamping elements for the tension relief fastening of the conductors (4,5).

## Revendications

1. Arrangement de liaison électriquement conductrice d'un composant électrique, qui est logé dans un boîtier (1) contenant de l'huile, avec une unité électrique (6), dans lequel au moins deux fils (4, 5) constitués d'un conducteur électrique et d'un isolant entourant celui-ci sont montés entre le composant et l'unité (6), dans lequel une ouverture du boîtier (1) est fermée de manière étanche à l'huile et à l'humidité en position d'utilisation par un passage (7) constitué d'un matériau isolant, lequel possède au moins un trou de traversée (9) servant à la traversée des fils (4, 5), et dans lequel les fils sont passés à travers au moins un support présent dans le trou de traversée (9) du passage (7), **caractérisé en ce**
- **que** le support est réalisé sous la forme d'un bouchon d'étanchéité (10) qui entoure étroitement les fils (4, 5) qui, en position d'utilisation, est disposé de manière étanche à l'huile et à l'humidité dans le trou de traversée (9) du passage (7), et
- **que** pour les fils (4, 5) qui sont installés sans interruption et sans l'utilisation d'éléments de retenue d'huile entre le composant électrique et l'unité électrique (6), un fil est respectivement employé avec lequel un matériau imperméable à l'huile est en plus appliqué entre le conducteur et son isolant, lequel remplit la totalité des espaces vides présentant à l'intérieur de l'espace entouré par l'isolant, le matériau dans le cas d' un fil à conducteur massif étant réalisé sous la forme d'une couche intermédiaire qui entoure entièrement celui-ci et dans le cas d'un fil à conducteur multibrins remplissant également ses espaces vides intérieurs.

2. Arrangement selon la revendication 1, **caractérisé en ce que** chaque fil (4, 5) passe à travers un bouchon d'étanchéité (10) séparé.

3. Arrangement selon la revendication 1, **caractérisé en ce que** deux fils (4, 5) ou plus passent à travers un bouchon d'étanchéité (10) commun.

4. Arrangement selon l'une des revendications 1 à 3, **caractérisé en ce qu'**une extension (10) comportant des éléments de serrage destinés à la fixation des fils (4, 5) avec soulagement de la traction est montée au niveau du passage (7).
